(19) Europäisches Patentamt

European Patent Office

Office européen des brevets

(11) **EP 3 559 092 B1**

(12) **EUROPEAN PATENT SPECIFICATION**

(45) Date of publication and mention
of the grant of the patent:
**15.12.2021 Bulletin 2021/50**

(21) Application number: **17817534.5**

(22) Date of filing: **29.11.2017**

(51) Int Cl.:
*C08J 3/00* $^{(2006.01)}$        *C08J 5/18* $^{(2006.01)}$
*C09D 123/06* $^{(2006.01)}$        *C08L 23/04* $^{(2006.01)}$
*C08L 23/06* $^{(2006.01)}$

(86) International application number:
**PCT/US2017/063743**

(87) International publication number:
**WO 2018/118362 (28.06.2018 Gazette 2018/26)**

(54) **PROCESS TO MAKE HIGH DENSITY ETHYLENE-BASED POLYMER COMPOSITIONS WITH HIGH MELT STRENGTH**

VERFAHREN ZUR HERSTELLUNG VON HOCHDICHTEN ETHYLENBASIERTEN POLYMERZUSAMMENSETZUNGEN MIT HOHER SCHMELZFESTIGKEIT

PROCÉDÉ DE FABRICATION DE COMPOSITIONS POLYMÈRES À BASE D'ÉTHYLÈNE HAUTE DENSITÉ PRÉSENTANT UNE GRANDE RÉSISTANCE À LA FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2016 US 201662437924 P**

(43) Date of publication of application:
**30.10.2019 Bulletin 2019/44**

(73) Proprietor: **Dow Global Technologies LLC Midland, MI 48674 (US)**

(72) Inventors:
• **DEN DOELDER, Cornelis F.J.**
**4530AA Terneuzen (NL)**
• **PEREZ, Carmelo Declet**
**Freeport, TX 77541 (US)**
• **BERBEE, Otto J.**
**4561 XE Hulst (NL)**
• **BROWN, Hayley A.**
**Lake Jackson, TX 77566 (US)**

(74) Representative: **Boult Wade Tennant LLP Salisbury Square House 8 Salisbury Square London EC4Y 8AP (GB)**

(56) References cited:
**WO-A1-2012/177299    WO-A1-2014/081458 WO-A1-2016/053483**

EP 3 559 092 B1

**Description**

REFERENCE TO RELATED APPLICATIONS

This application claims the benefit of U.S. Provisional Application No. 62/437,924, filed on December 22, 2016.

FIELD OF THE INVENTION

The invention is directed to high density (for example, a density > 0.920 g/cc) ethylene-based polymer compositions with high melt strength (for example, a MS ≥ 14.0 cN).

BACKGROUND

Low density polyethylene (LDPE) homopolymers with melt index and melt strength levels suitable for extrusion coating are made in tubular reactor system, under specific reaction conditions, including high reaction zone peak temperatures. These conditions result in polymers with lower product density (for example, a density < 0.919 g/cc) and high n-hexane extractable level (for example, > 3.0 wt%). There is a need for higher density LDPE-based compositions with higher density (> 0.920 g/cc) to improve at least one of coating performance, foaming performance, barrier properties, compression properties, and n-hexane extractable levels.

International Publication WO 2014/081458 discloses compositions comprising a first ethylene-based polymer, formed by a high pressure, free-radical polymerization process, and comprising the following properties: a) a Mw(abs) versus melt index I2 relationship: Mw(abs) < A x [(I2)B], where A = 5.00 × 10² (kg/mole)/(dg/min)B, and B = -0.40; and b) a MS versus I2 relationship: MS ≥ C x [(I2)D], where C = 13.5 cN/(dg/min)D, and D = -0.55. These compositions can be used to form coatings, film, foam, laminate, fibers, tapes, wire and cable, and woven or non-woven fabrics.

International Publication WO 2014/190041 discloses compositions comprising a first ethylene-based polymer formed by a high pressure, free-radical polymerization process and having a melt index of < 2.5 g/10 min and a second ethylene-based polymer formed by a high pressure, free-radical polymerization process and having a density ≥ 0.924 g/cc, wherein the composition has a melt index of from 2.0 to 10 g/10 min and a density of from 0.922 to 0.935 g/cc.

EP0792318 discloses an extrusion coating comprising 75 wt% to 95 wt% of an ethylene/alpha-olefin interpolymer selected from a substantially linear ethylene polymer, a homogeneously branched linear ethylene polymer, and a heterogeneously branched ethylene polymer and 5 wt% to 25 wt% of an ethylene-based polymer made by a high pressure polymerization process, wherein the high pressure ethylene-based polymer is added to the ethylene/alpha-olefin interpolymer using equipment which is part of the polymerization configuration of the ethylene/alpha-olefin interpolymer.

Addition polymer compositions are described in the following references: Inter-national Publications Nos. WO 2005/068548, WO 2013/078018, WO83/00490, WO2015/092662, WO 2014/190036, WO 2014/190039, WO2013/178242A1, WO2013/178241A1, and WO 2013/078224; U.S. Patents 7,956,129, 7,812,094, 8,247,065 and 6,291,590; and European Patent Application Nos. 1187876A1, and EP2123707A1.

WO 2016/053483 relates to polyethylene polymers, compositions comprising such polyethylene, and films made therefrom.

However, as discussed above, there is a need for higher density LDPE-based compositions with higher density (> 0.920 g/cc) while maintaining high melt strength (≥ 14.0 cN) to improve at least one of coating performance, foaming performance, barrier properties, compression properties, and n-hexane extractable levels. One or more of these needs have been met by the following invention.

SUMMARY OF INVENTION

In a first aspect, the invention provides a process defined by claim 1 for producing a composition comprising the following:

A) an ethylene-based polymer that has a density greater than, or equal to, 0.940 g/cc and a melt index (I2) of from greater than, or equal to, 2.0 g/10 min to less than, or equal to, 70.0 g/10 min, and
B) an ethylene homopolymer, formed by polymerizing a reaction mixture comprising ethylene, using a free-radical, high pressure polymerization process; and

wherein component (B) is polymerized in a polymerization configuration comprising at least one reactor, at least one separator, and at least one pelletizer, and
wherein component (A) is added to a molten stream of component (B) after component (B) exits the separator and before component (B) is solidified in the pelletizer.

In a further aspect, the invention provides a polymerization configuration defined by claim 5 for producing a composition comprising the following:

A) an ethylene-based polymer that has a density greater than, or equal to, 0.940 g/cc and a melt index (12) of from greater than, or equal to, 2.0 g/10 min to less than, or equal to, 70.0 g/10 min, and
B) an ethylene homopolymer, formed by polymerizing a reaction mixture comprising ethylene, using a free-radical, high pressure polymerization process; and
wherein the polymerization configuration comprises at least one reactor, at least one separator, at least one pelletizer, and a device used to feed component (A), in molten state, to a molten stream of component (B) before the pelletizer.

In a further aspect, the invention provides a composition defined by claim 9 comprising the following:

A) an ethylene-based polymer that has a density greater than, or equal to, 0.940 g/cc and a melt index (12) of from greater than, or equal to, 2.0 g/10 min to less than, or equal to, 70.0 g/10 min, and
B) a LDPE, formed by polymerizing a reaction mixture comprising ethylene, using a free-radical, high pressure polymerization process; and

wherein the ratio of the melt strength of the composition to the melt strength of component (B) is greater than or equal to 1.04; and
wherein the composition has a density of greater than 0.920 g/cc.

BRIEF DESCRIPTION OF THE DRAWINGS

Figure 1 is a plot of WVTR versus density differential for several HDPE/LDPE blends according to the present disclosure.
Figure 2 depicts an apparatus configuration for an inventive process according to the present disclosure.

DETAILED DESCRIPTION

The present disclosure provides a process for producing a composition comprising the following:

A) an ethylene-based polymer that has a density greater than, or equal to, 0.940 g/cc and a melt index (12) of from greater than, or equal to, 2.0 g/10 min to less than, or equal to, 70.0 g/10 min, and
B) an ethylene homopolymer, formed by polymerizing a reaction mixture comprising ethylene, using a free-radical, high pressure polymerization process; and

wherein component (B) is polymerized in a polymerization configuration comprising at least one reactor, at least one separator and at least one pelletizer, and wherein component (A) is added to a molten stream of component (B), after component (B) exits the separator and before component (B) is solidified in the pelletizer.
The present disclosure also provides a polymerization configuration for producing a composition comprising (A) an ethylene-based polymer with a density greater than or equal to 0.940 g/cc and a melt index (12) of from greater than, or equal to, 2.0 g/10 min to less than, or equal to, 70.0 g/10 min and (B) an ethylene homopolymer formed by polymerizing a reaction mixture comprising ethylene using a free-radical, high pressure polymerization process, wherein the polymerization configuration comprises at least one reactor, at least one separator, at least one pelletizer and a device used to feed component (A), in molten state, to a molten stream of component (B) before the pelletizer.
Surprisingly it has been discovered that LDPE homopolymer reactor products with a density around 0.919 g/cc and n-hexane extractables below 3.0 wt% can be further increased in density (to at least 0.920 g/cc), while maintaining high melt strength, by in-plant hot melt addition and blending of a low amount (< 6 wt%) of HDPE. The resulting composition shows good coating and foaming performance, good barrier and compression properties, and low n-hexane extractable levels.
In an embodiment, the disclosure also provides a composition comprising (A) an ethylene-based polymer having a density greater than or equal to 0.940 g/cc and a melt index (12) of from greater than, or equal to, 2.0 g/10 min to less than, or equal to, 70.0 g/10 min and (B) an LDPE formed by polymerizing a reaction mixture comprising ethylene using a free-radical, high pressure polymerization process, wherein the ratio of the melt strength of the composition to the melt strength of component (B) is greater than or equal to 1.04 and wherein the composition has a density of greater than 0.920 g/cc.

**EP 3 559 092 B1**

The composition may comprise a combination of two or more embodiments as described herein.

The ethylene-based polymer of component (A) may comprise a combination of two or more embodiments as described herein.

The ethylene homopolymer of component (B) may comprise a combination of two or more embodiments as described herein.

In an embodiment, the ethylene-based polymer of component (A) is different from the ethylene homopolymer of component (B).

**Component (A) — Ethylene-Based Polymer (Density $\geq$ 0.940 g/cc)**

The composition includes (A) an ethylene-based polymer having a density greater than or equal to 0.940 g/cc.

In an embodiment, the ethylene-based polymer has a density of from greater than 0.940 g/cc, or 0.942 g/cc, or 0.944 g/cc, or 0.945 g/cc to 0.970 g/cc, or 0.968 g/cc, or 0.966 g/cc, or 0.965 g/cc. (1 cc = 1 $cm^3$)

In an embodiment, the ethylene-based polymer has a density of from $\geq$ 0.940 g/cc to $\leq$ 0.970 g/cc, or from $\geq$ 0.942 g/cc to $\leq$ 0.968 g/cc, or from $\geq$ 0.944 g/cc to $\leq$ 0.966 g/cc, or from $\geq$ 0.945 g/cc to $\leq$ 0.965 g/cc.

In an embodiment, the ethylene-based polymer is an ethylene homopolymer or an ethylene-based interpolymer. In an embodiment, the ethylene-based polymer is an ethylene homopolymer or an ethylene-based copolymer.

In embodiments in which the ethylene-based polymer is an ethylene-based interpolymer, the ethylene-based interpolymer is preferably an ethylene/alpha-olefin interpolymer. Suitable alpha-olefins include at least one $C_3$-$C_{20}$ alpha-olefin comonomer, with preferred alpha-olefins including propylene, 1-butene, 1 pentene, 4-methyl-1-pentene, 1-hexene, and 1-octene.

An ethylene-based interpolymer preferably has at least 50 percent by weight units derived from ethylene, i.e., polymerized ethylene, or at least 70 percent by weight, or at least 80 percent by weight, or at least 85 percent by weight, or at least 90 weight percent, or at least 95 percent by weight ethylene in polymerized form.

In an embodiment, the ethylene-based interpolymer does not contain comonomers capable of crosslinking polymer chains, for instance, comonomers containing multiple unsaturations or containing an acetylenic functionality.

In an embodiment, the ethylene-based polymer of component (A) has a melt temperature (Tm) of from greater than or equal to 125°C, or greater than or equal to 128°C, or greater than or equal to 130°C to less than or equal to 132°C, or less than or equal to 135°C, or less than or equal to 137°C.

The ethylene-based polymer of component (A) has a melt index (12) of from $\geq$ 2.0 g/10 min, or $\geq$ 2.5 g/10 min, or $\geq$ 3.0 g/10 min, or $\geq$ 3.5 g/10 min, or $\geq$ 4.0 g/10 min to $\leq$ 70.0 g/10 min, or $\leq$ 65.0 g/10 min, or $\leq$ 60.0 g/10 min, or $\leq$ 50.0 g/10 min, or $\leq$ 40.0 g/10 min, or $\leq$ 30.0 g/10 min, or $\leq$ 20.0 g/10 min, or $\leq$ 10.0 g/10 min.

In an embodiment, the ethylene-based polymer of component (A) has an 110/12 ratio of from 4.5 to 10, or from 4.5 to 9.0, or from 4.5 to 8.0, or from 4.6 to 8.0, or from 4.7 to 8.0, or from 4.8 to 7.0, or from 4.8 to 6.5, or from 4.8 to 6.2, or from 4.8 to 6.0.

In one embodiment, the ethylene-based polymer of component (A) has a density of from $\geq$ 0.940 g/cc, or $\geq$ 0.942 g/cc, or $\geq$ 0.944 g/cc, or $\geq$ 0.945 g/cc to $\leq$ 0.970 g/cc, or $\leq$ 0.968 g/cc, or $\leq$ 0.966 g/cc, or $\leq$ 0.965 g/cc and has a melt index (12) of from $\geq$ 2.0 g/10 min, or $\geq$ 2.5 g/10 min, or $\geq$ 3.0 g/10 min, or $\geq$ 3.5 g/10 min, or $\geq$ 4.0 g/10 min to $\leq$ 70.0 g/10 min, or $\leq$ 65.0 g/10 min, or $\leq$ 60.0 g/10 min, or $\leq$ 50.0 g/10 min, or $\leq$ 40.0 g/10 min, or $\leq$ 30.0 g/10 min, or $\leq$ 20.0 g/10 min, or $\leq$ 10.0 g/10 min.

In one embodiment, the ethylene-based polymer of component (A) is a high density polyethylene (HDPE). In an embodiment, the HDPE is an ethylene homopolymer or an ethylene/alpha-olefin interpolymer.

In an embodiment, the HDPE is an ethylene homopolymer.

In an embodiment, the HDPE has a density of from 0.940 g/cc, or 1.941 g/cc, or 0.942 g/cc, or 0.944 g/cc, or 0.945 g/cc to 0.970 g/cc, or 0.969 g/cc, or 0.967 g/cc, or 0.966 g/cc, or 0.965 g/cc.

In one embodiment, the component (A) comprises only one HDPE and does not comprise a multimodal HDPE blend of two or more HDPE polymers.

As used herein the term "multimodal HDPE blend" refers to a polymer blend containing at least two HDPE polymers. Such blends can be in-situ reactor blends formed using two or more catalyst systems and/or two or more sets of polymerization conditions; or can be post-reactor blends of two or more different HDPE polymers (for example, two or more HDPE polymers that differ in one or more of the following properties: density, melt index, Mw, Mn, MWD, or other properties).

Examples of suitable, commercially available HDPEs include Dow High Density Polyethylene resins sold under the trade names CONTINUUM™ and UNIVAL™.

HDPE is distinct from each of the following types of ethylene-based polymer: linear low density polyethylene (LLDPE), metallocene-catalyzed LLDPE (m-LLDPE), ultra-low density polyethylene (ULDPE), very low density polyethylene (VLDPE), and LDPE.

**Component (B) — Ethylene Homopolymer**

In an embodiment, the composition includes (B) an ethylene homopolymer formed by polymerizing a reaction mixture comprising ethylene using a free-radicle, high pressure polymerization process.

In an embodiment, the ethylene homopolymer is a LDPE.

In an embodiment, the ethylene homopolymer has a melt strength of from > 5cN, or > 6 cN, or > 7 cN, or > 8 cN, or > 9 cN to < 20 cN, or < 19 cN, or < 18 cN, or 17 cN, or < 16 cN, or < 15 cN, or < 14 cN.

In an embodiment, the ethylene homopolymer has a melt index (MI) of from $\geq$ 0.5 g/10 min, or $\geq$ 0.75 g/10 min, or $\geq$ 1.0 g/10 min, or $\geq$ 1.25 g/10 min to $\leq$ 15.0 g/10 min, or $\leq$ 14.0 g/10 min, or $\leq$ 13.0 g/10 min, or $\leq$ 12.0 g/10 min, or $\leq$ 11.0 g/10 min, or $\leq$ 10.0 g/10 min.

In an embodiment, the ethylene homopolymer has a density of from 0.916 g/cc to 0.922 g/cc, or from 0.916 g/cc to 0.920 g/cc.

*Free-Radical, High Pressure Polymerization Process and Related Polymerization Configuration*

For a high pressure, free radical initiated polymerization process as used in the present disclosure, two basic types of reactors are known. The first type is an agitated autoclave vessel having one or more reaction zones (the autoclave reactor). The second type is a jacketed tube which has one or more reaction zones (the tubular reactor). In a preferred embodiment, the high pressure, free radical initiated polymerization process is carried out in a tubular reactor having at least two, or preferably at least three reaction zones.

The pressure in each autoclave and tubular reactor zone of the process is typically from 100 to 400, more typically from 120 to 360, and even more typically from 150 to 320 MPa. The polymerization temperature in each tubular reactor zone of the process is typically from 100 to 400°C, more typically from 130 to 360°C, and even more typically from 140 to 330°C. The polymerization temperature in each autoclave reactor zone of the process is typically from 150 to 300°C, more typically from 165 to 290°C, and even more typically from 180 to 280°C. One skilled in the art understands that the temperatures in the autoclave are considerably lower and less differentiated than those of the tubular reactor, and thus, more favorable extractable levels are typically observed in polymers produced in an autoclave-based reactor system.

The process includes one or more separators. Separators separate the reaction product from a reactor or reaction zone from unreacted monomers and/or other components used during polymerization. In an embodiment, separators separate the reaction product from a reactor or reaction zone into a polymer-rich stream and an unreacted monomer stream, which may or may not be recycled back to the reactor or reaction zone. High pressure separators (HPSs) and low pressure separators (LPSs) are both known for use in a high pressure, free radical polymerization process as described herein.

In an embodiment the process includes at least two separators. A first separator separates reaction product from a reactor or reaction zone into a first unreacted ethylene-rich recycle stream, which is ultimately cooled and recycled back to the reactor or reaction zone, and a first ethylene homopolymer-rich stream, which is send to a second separator for further separation. The second separator separates the feed from the first separator into a second unreacted ethylene-rich recycled stream, which is ultimately cooled and recycled back to the reactor or reaction zone, and a second ethylene homopolymer-rich stream.

In one embodiment, the first separator is a HPS and the second separator is a LPS.

In an embodiment, the process includes at least one separator which operates at a pressure of < 5 MPa (50 Bar), or < 4 MPa (40 Bar), or <3 MPa (30 Bar), or < 2 MPa (20 Bar).

The polymerization configuration includes at least one pelletizer. In an embodiment, the pelletizer may be a pelletizer attachment or an extruder adapted for pelletizing.

The high pressure, free radical polymerization process uses a polymerization configuration comprising at least one reactor, at least one separator and at least one pelletizer. In an embodiment, the at least one separator is downstream from the at least one reactor, and the at least one pelletizer is downstream from the at least one separator.

For a free-radical, high pressure polymerization process, ethylene is polymerized in the reactor(s) and/or reaction zone(s) to form the ethylene homopolymer.

In an embodiment, the reaction mixture comprises ethylene.

In an embodiment, the reaction mixture is free of alpha-olefins other than ethylene. In an embodiment, the reaction mixture comprises no other monomers other than ethylene.

In an embodiment, the reaction mixture comprises ethylene and at least one initiator. The type of free radical initiator to be used in the present process is not critical, but preferably one of the initiators applied, should allow high temperature operation in the range from 300°C to 350°C. Free radical initiators that are generally used include organic peroxides, such as peresters, perketals, peroxy ketones, percarbonates and cyclic multifunctional peroxides. These organic peroxy initiators are used in conventional amounts, typically from 0.005 to 0.2 wt% based on the weight of polymerizable monomers.

Other suitable initiators include azodicarboxylic esters, azodicarboxylic dinitriles and 1,1,2,2-tetramethylethane derivatives, and other components capable of forming free radicals in the desired operating temperature range.

Peroxides are typically injected as diluted solutions in a suitable solvent, for example, in a hydrocarbon solvent.

In one embodiment, an initiator is added to at least one reaction zone of the polymerization, and wherein the initiator has a "half-life temperature at one second" greater than 255°C, preferably greater than 260°C. In a further embodiment, such initiators are used at a peak polymerization temperature from 320°C to 350°C. In a further embodiment, the initiator comprises at least one peroxide group incorporated in a ring structure.

Examples of such initiators include TRIGONOX 301 (3,6,9-triethyl-3,6,9-trimethyl-1,4,7-triperoxonaan) and TRIGONOX 311 (3,3,5,7,7-pentamethyl-1,2,4-trioxepane), both available from Akzo Nobel, and HMCH-4-AL (3,3,6,6,9,9-hexamethyl-1,2,4,5-tetroxonane) available from United Initiators. See also International Publication Nos. WO 02/14379 and WO 01/68723.

In an embodiment, the reaction mixture comprises ethylene, at least one initiator and at least one chain transfer agent. Chain transfer agents or telogens are used to control the melt index in a polymerization process. Chain transfer involves the termination of growing polymer chains, thus limiting the ultimate molecular weight of the polymer material. Chain transfer agents are typically hydrogen atom donors that will react with a growing polymer chain and stop the polymerization reaction of the chain. These agents can be of many different types, from saturated hydrocarbons or unsaturated hydrocarbons to aldehydes, ketones or alcohols. By controlling the concentration of the selected chain transfer agent, one can control the length of polymer chains, and, hence, the molecular weight, for example, the number average molecular weight, Mn. The melt flow index (MFI or $I_2$) of a polymer, which is related to Mn, is controlled in the same way.

The chain transfer agents used in the process of this invention include aliphatic and olefinic hydrocarbons, such as pentane, hexane, cyclohexane, propene, pentene or hexane; ketones such as acetone, diethyl ketone or diamyl ketone; aldehydes such as formaldehyde or acetaldehyde; and saturated aliphatic aldehyde alcohols such as methanol, ethanol, propanol or butanol. The chain transfer agent may also be a monomeric chain transfer agent. For example, see WO 2012/057975, US 61/579067 (see International Application No. WO 2013/095969 filed December 10, 2012) and US 61/664956 (filed June 27, 2012).

A further way to influence the melt index includes the buildup and control, in the ethylene recycle streams, of incoming ethylene impurities, like methane and ethane, peroxide dissociation products, like tert-butanol, acetone, and or solvent components used to dilute the initiators. These ethylene impurities, peroxide dissociation products and/or dilution solvent components can act as chain transfer agents.

**Process for Producing the Composition Comprising Component (A) and Component (B) and Related Polymerization Configuration**

In an embodiment, the disclosure provides a process for producing a composition comprising (A) an ethylene-based polymer that has a density greater than or equal to 0.940 g/cc and a melt index (12) of from greater than, or equal to, 2.0 g/10 min to less than, or equal to, 70.0 g/10 min and (B) an ethylene homopolymer formed by polymerizing a reaction mixture comprising ethylene, using a free-radical, high pressure polymerization process, wherein component (B) is polymerized in a polymerization configuration comprising at least one reactor, at least one separator and at least one pelletizer, and wherein component (A) is added to a molten stream of component (B) after component (B) exits the separator and before component (B) is solidified in the pelletizer.

In an embodiment, the disclosure provides a polymerization configuration for producing a composition comprising (A) an ethylene-based polymer that has a density greater than or equal to 0.940 g/cc and a melt index (12) of from greater than, or equal to, 2.0 g/10 min to less than, or equal to, 70.0 g/10 min and (B) an ethylene homopolymer formed by polymerizing a reaction mixture comprising ethylene, using a free-radical, high pressure polymerization process, wherein the polymerization configuration comprises at least one reactor, at least one separator, at least one pelletizer, and a device used to feed component (A), in molten state, to a molten stream of component (B) before the pelletizer.

Specifically, in an embodiment, the process comprises a free-radical, high pressure polymerization process, wherein the polymerization configuration comprises at least one reactor, at least one separator, and at least one pelletizer, wherein a stream of component (A) (e.g., HDPE) is added to a molten stream of component (B) (e.g., LDPE) after the high pressure resin (component (B)) exits the separator, in the molten state, and before the high pressure resin is solidified in the pelletizer. Furthermore, the polymerization configuration may also make use of a device to feed the component (A), in the molten state, to the molten stream of component (B) before the pelletizer.

The process disclosed herein is advantageous because it provide an in-line configuration for obtaining a resin with the desired final properties. The process allows for a reduction in the number of steps to produce a resin with the desired final properties compared to conventional mixing processes in which typical solid pellets of the component (B) are re-melted in a subsequent process/step and then combined with the desired amounts of component (A). The process disclosed herein is further advantageous in that it requires less energy compared to alternative and/or conventional methods of first producing pellets of component (A) and component (B) and then reprocessing them to form an intimate blended mixture.

A free-radical, high pressure polymerization process and polymerization configuration may be according to any embodiment, or combination of two or more embodiments, described herein.

Generally, the polymer-rich stream exiting the one or more separators is a molten stream. The molten stream then enters the pelletizer. In an embodiment, the ethylene-based polymer of component (A) is added to the molten stream of component (B) after leaving the one or more separators but before entering the one or more pelletizers.

In an embodiment, component (A) is in a molten state when added to the molten stream of component (B).

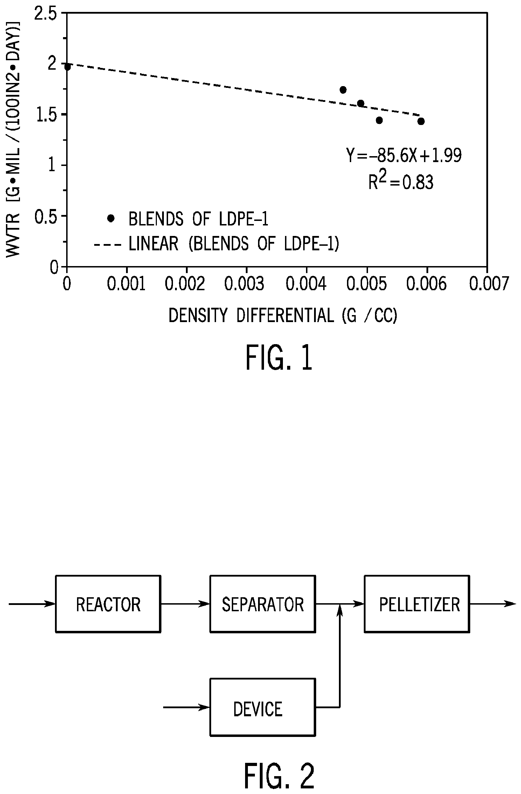

In an embodiment, the polymerization configuration is as shown in FIG. 2. Such a polymerization configuration can be used to produce high pressure polyethylene resins with enhanced melt strength and a higher final density as compared to resins produced by conventional means, e.g., methods in which pellets of component (A) and component (B) are produced first and then remelted to produce a blend. The polymerization configuration shown in FIG. 2 includes in-line intimate mixing of a stream of high pressure polyethylene, in the molten state, and a stream of high density polyethylene in the molten state.

In the particular configuration shown in FIG. 2, a single-screw (side-arm) extruder is used to deliver the molten stream of component (A) into the finishing sections (e.g., the sections between a separator (e.g., separator operates below 5 MPa (50 Bar), or 4 MPa (40 Bar), or 3 MPa (30 Bar), or 2 MPa (20 Bar)) and a pelletizer) of a free-radical, high pressure polymerization process. This technology works well when the side-arm extruder injects into, for instance, the discharge section of a large single screw extruder or a gear pump, such as that used to deliver a stream of molten component (B) from the separator unit into the pelletizer. Side-arm extruders are designed with effective screw and temperature control technology to melt and mix the stream of component (A) in such a way as to match the main stream of molten component (B) in viscosity and melt temperature. The extruder barrel temperature can be controlled in zones of the length of the screw by using either steam or hot oil and, in combination with the screw design, provides effective melting and pressure to inject into the main polymer stream. Side-arm feed rates can operate in ratio with the main polymer flow in order to ensure correct concentrations of the component (A) in the final product. Side-arm extruders operate in a slightly starve-fed mode by using loss-and-weight or volumetric feeders upstream of the extruder.

In an embodiment, component (A) is added to the molten stream of component (B) using a side-arm extruder. In an embodiment, the side-arm extruder injects into a single screw extruder or into a gear pump section of an extruder.

In an embodiment, component (A) and component (B) are mixed in at least one static mixer before the pelletizer.

In an embodiment, the polymerization configuration includes a device used to feed component (A), in the molten state, to a molten stream of component (B). In an embodiment, the device is a side-arm extruder. In an embodiment, the side-arm extruder injects into a single screw extruder or into a gear pump section of an extruder.

In an embodiment, the polymerization configuration includes at least one static mixer before the pelletizer.

A masterbatch containing the component (A) can be further tailored to provide both additives and/or other polymers to improve the final properties of the composition.

**Composition**

The disclosure provides a composition comprising (A) an ethylene-based polymer with a density of greater than, or equal to, 0.940 g/cc and a melt index (I2) of from greater than, or equal to, 2.0 g/10 min to less than, or equal to, 70.0 g/10 min and (B) an LDPE formed by polymerizing a reaction mixture comprising ethylene using a free-radical, high pressure polymerization process.

In an embodiment, the composition comprises from ≥ 2.0 wt%, or ≥ 2.5 wt%, or ≥ 3.0 wt% to ≤ 9.0 wt%, or ≤ 7.0 wt%, or ≤ 5.0 wt% of component (A), based on the total weight of the composition.

In an embodiment, the composition comprises from ≥ 2.0 wt% to ≤ 9.0 wt%, or from ≥ 2.5 wt% to ≤ 7.0 wt%, or from ≥ 3.0 wt% to ≤ 5.0 wt% of component (A), based on the total weight of the composition.

In an embodiment, the composition comprises from ≥ 2.0 wt%, or ≥ 2.5 wt%, or ≥ 3.0 wt% to ≤ 9.0 wt%, or ≤ 7.0 wt%, or ≤ 3 wt% of component (A), based on the sum weight of component (A) and component (B).

In an embodiment, the composition comprises from ≥ 2.0 wt% to ≤ 9.0 wt%, or ≥ 2.5 wt% to ≤ 7.0 wt%, or ≥ 3.0 wt% to ≤ 5.0 wt% of component (A), based on the sum weight of component (A) and component (B).

In an embodiment, the composition comprises from ≥ 90 wt%, or ≥ 92 wt%, or ≥ 95 wt% to ≤ 99 wt%, or ≤98 wt%, or ≤ 97 wt% of component (B), based on the sum weight of component (A) and component (B).

In an embodiment, the composition comprises from ≥ 90 wt%, or ≥ 92 wt%, or ≥ 95 wt% to ≤ 99 wt%, or ≤98 wt%, or ≤ 97 wt% of component (B), based on the total weight of the composition.

In an embodiment, the composition comprises from ≥ 50 wt%, or ≥ 60 wt%, or ≥ 70 wt% to < 100 wt%, or ≤ 99 wt%, or ≤ 95 wt%, or ≤ 90 wt%, or ≤ 80 wt% of component (A) and component (B) based on the total weight of the composition.

In an embodiment, the composition comprises from ≥ 50 wt% to ≤ 80 wt%, or from ≥ 60 wt% to ≤ 90 wt%, or ≥ 70 wt% to ≤ 95 wt% of component (A) and component (B) based on the total weight of the composition.

In an embodiment, the composition comprises < 100 wt%, or from ≤ 99 wt% to ≥ 50 wt% of component (A) and component (B) based on the total weight of the composition.

In an embodiment, the composition comprises ≥ 95 wt%, or ≥ 96 wt%, or ≥ 97 wt%, or ≥ 98 wt%, or ≥ 99 wt% of component (A) and component (B) based on the total weight of the composition. In an embodiment, the composition comprises < 100 wt% of component (A) and component (B) based on the total weight of the composition.

In an embodiment, the weight ratio of component (A) to component (B) in the composition is from ≥ 0.015, or ≥ 0.020, or ≥ 0.025, or ≥ 0.030 to ≤ 0.065, or ≤ 0.060, or ≤ 0.055.

In an embodiment, the weight ratio of component (A) to component (B) in the composition is from ≥ 0.015 to ≤ 0.065, or from ≥ 0.020 to ≤ 0.065, or from ≥ 0.025 to ≤ 0.060, or from ≥ 0.030 to ≤ 0.055.

The composition has a density of > 0.920 g/cc. In an embodiment, the composition has a density of from ≥ 0.920 g/cc, or ≥ 0.921 g/cc to ≤ 0.930 g/cc, or ≤ 0.928 g/cc, or ≤ 0.926 g/cc, or ≤ 0.924 g/cc, or ≤ 0.922 g/cc.

In an embodiment, the density differential between the composition and component (B) (pc - $\rho_B$) is from ≥ 0.0011 g/cc, or ≥ 0.0012 g/cc, or ≥ 0.0013 g/cc to 1≤ 0.0026 g/cc, or ≤ 0.0025 g/cc, or ≤ 0.0024 g/cc.

In an embodiment, the density differential between the composition and component (B) (pc - $\rho_B$) is from ≥ 0.0011 g/cc to ≤ 0.0026 g/cc, or from ≥ 0.0012 g/cc to ≤ 0.0025 g/cc, or from ≥ 0.0013 g/cc to ≤ 0.0024 g/cc.

In an embodiment, the melt index of the composition is from ≥ 1.00 g/10 min, or ≥ 1.05 g/10 min, or ≥ 1.10 g/10 min, or ≥ 1.15 g/10 min to ≤ 10.00 g/10 min, or ≤ 8.00 g/10 min, or ≤ 6.00 g/10 min, or ≤ 4 g/10 min, or ≤ 3 g/10 min, or ≤ 2.5 g/10 min, or ≤ 2.00 g/10 min, or ≤ 1.8 g/10 min, or ≤ 1.6 g/10 min, or ≤ 1.4 g/10 min.

In an embodiment, the melt index of the composition is from ≥ 1.00 g/10 min to ≤ 10.00 g/10 min, or from ≥ 1.00 g/10 min to ≤ 8.00 g/10 min, or from ≥ 1.00 g/10 min to ≤ 6.00 g/10 min, or from ≥ 1.00 g/10 min to ≤ 4.00 g/10 min, or from ≥ 1.00 g/10 min to ≤ 3.00 g/10 min, or from ≥ 1.05 g/10 min to ≤ 2.50 g/10 min, or from ≥ 1.10 g/10 min to ≤ 2.00 g/10 min, or from ≥ 1.15 g/10 min to ≤ 1.80 g/10 min, or from ≥ 1.15 g/10 min to ≤ 1.60 g/10 min, or from ≥ 1.15 g/10 min to ≤ 1.40 g/10 min.

In an embodiment, the melt strength of the composition is ≥ 10.0 cN, or ≥ 11 cN, or ≥ 12.0 cN, or ≥ 13.0 cN, or ≥ 14.0 cN, or ≥ 14.5 cN, or ≥ 15.0 cN, or ≥ 15.5 cN to ≤ 40 cN, or ≤ 30 cN.

The ratio of the melt strength of the composition to the melt strength of component (B) is ≥ 1.04, or ≥ 1.05, or ≥ 1.06, or ≥ 1.07, or ≥ 1.08, or ≥ 1.09, or ≥ 1.10. In an embodiment, the ratio of the melt strength of the composition to the melt strength of component (B) is ≤ 2.00, or ≤ 1.80, or ≤ 1.60, or ≤ 1.40.

In an embodiment, the ratio of the melt strength of the composition to the melt strength of component (B) is from ≥1.04, or ≥ 1.05, or ≥ 1.06, or ≥ 1.07, or ≥ 1.08, or ≥ 1.09, or ≥ 1.10 to ≤ 2.00, or ≤ 1.80, or ≤ 1.60, or ≤ 1.40.

In an embodiment, the melt index (12) ratio of component (A) to component (B) is from ≥ 2.0, or from ≥ 2.5, or from ≥ 3.0 to ≤ 60, or to ≤ 50, or to ≤ 40, or to ≤ 30, or to ≤ 25, or to ≤ 20, or to ≤ 15, or to ≤ 10.

In an embodiment, the melt index (12) ratio of the composition to component (B) is from ≥ 1.02, or ≥ 1.03, or ≥ 1.04 to ≤ 1.20, or ≤ 1.18, or ≤ 1.16, or ≤ 1.14.

In an embodiment, the melt index (12) ratio of the composition to component (B) is from ≥ 1.02 to ≤ 1.20, or from ≥ 1.03 to ≤ 1.18, or from ≥ 1.04 to ≤ 1.16, or from ≥ 1.04 to ≥ 1.14.

In an embodiment, the composition has a water vapor transmission rate (WVTR) of ≤ 2.00 g·mil/(100 in$^2$·day), or ≤ 1.98 g·mil/(100 in$^2$·day), or ≤ 1.96 g·mil/(100 in$^2$·day), or ≤ 1.94 g·mil/(100 in$^2$·day), or ≤ 1.92 g·mil/(100 in$^2$·day), or ≤ 1.90 g·mil/(100 in$^2$·day), or ≤ 1.89 g·mil/(100 in$^2$·day), or ≤ 1.88 g·mil/(100 in$^2$·day).

In an embodiment, the composition has a hexane extractables content of ≤ 3.0 wt%, or ≤ 2.9 wt%, or ≤ 2.8 wt%, or ≤ 2.7 wt%, or ≤ 2.6 wt%, or ≤ 2.5 wt%, or ≤ 2.4 wt%, or ≤ 2.3 wt%, or ≤ 2.2 wt%, or ≤ 2.1 wt%, or ≤ 2.0 wt%, based on the total weight of the composition.

In an embodiment, the composition has a hexane extractables content of from ≤ 3.0 wt%, or from ≤ 2.9 wt%, or from ≤ 2.8 wt%, or from ≤ 2.7 wt%, or from ≤ 2.6 wt%, or from ≤ 2.5 wt%, or from ≤ 2.4 wt%, or from ≤ 2.3 wt%, or from ≤ 2.2 wt% to ≥ 1.0 wt%, or ≥ 1.2 wt%, or ≥ 1.4 wt%, or ≥ 1.6 wt%, or ≥ 1.8 wt%, or ≥ 1.9 wt%, based on the total weight of the composition.

In an embodiment, the composition has a hexane extractables content of from ≥ 1.0 wt% to ≤ 3.0 wt%, or from ≥ 1.2 wt% to ≤ 2.9 wt%, or from ≥ 1.4 wt% to ≤ 2.8 wt%, or from ≥ 1.6 wt% to ≤ 2.7 wt%, or from ≥ 1.8 wt% to ≤ 2.6 wt%, or from ≥ 1.9 wt% to ≤ 2.6 wt%, based on the total weight of the composition.

In an embodiment, one or more additives may be added to the composition. Suitable additives include stabilizers; fillers, such as organic or inorganic particles, including clays, talc, titanium dioxide, and silicon dioxide.

**Applications**

An inventive composition may be employed in a variety of conventional thermoplastic fabrication processes to produce useful articles, including extrusion coatings; films; and molded articles, such as blow molded, injection molded, or rotomolded articles; foams; wire and cable, fibers, and woven or non-woven fabrics. The disclosure therefore also provides an article comprising at least one component formed from a composition as described herein.

In one embodiment, the article is selected from a coating, a film, a foam, a laminate, a fiber, or a tape.

In one embodiment, the article is an extrusion coating. In another embodiment, the article is a film.

An inventive article may comprise a combination of two or more embodiments as described herein.

DEFINITIONS

Unless stated to the contrary, implicit from the context, or customary in the art, all parts and percents are based on weight and all test methods are current as of the filing date of this disclosure.

The term "composition," as used herein, refers to a mixture of materials which comprise the composition, as well as reaction products and decomposition products formed from the materials of the composition.

The terms "blend" or "polymer blend," as used, mean an intimate physical mixture (that is, without reaction) of two or more polymers. A blend may or may not be miscible (not phase separated at molecular level). A blend may or may not be phase separated. A blend may or may not contain one or more domain configurations, as determined from transmission electron spectroscopy, light scattering, x-ray scattering, and other methods known in the art. The blend may be effected by physically mixing the two or more polymers on the macro level (for example, melt blending resins or compounding) or the micro level (for example, simultaneous forming within the same reactor).

The term "polymer" refers to a compound prepared by polymerizing monomers, whether of the same or a different type. The generic term polymer thus embraces the term homopolymer (which refers to polymers prepared from only one type of monomer with the understanding that trace amounts of impurities can be incorporated into the polymer structure), and the term "interpolymer" as defined *infra.* Trace amounts of impurities may be incorporated into and/or within a polymer.

The term "interpolymer" refers to polymers prepared by the polymerization of at least two different types of monomers. The generic term interpolymer includes copolymers (which refers to polymers prepared from two different monomers), and polymers prepared from more than two different types of monomers.

The term "ethylene-based polymer" or "ethylene polymer" refers to a polymer that comprises a majority amount of polymerized ethylene based on the weight of the polymer and, optionally, may comprise at least one comonomer.

The term "ethylene-based interpolymer" or "ethylene interpolymer" refers to an interpolymer that comprises a majority amount of polymerized ethylene based on the weight of the interpolymer, and comprises at least one comonomer.

The term "ethylene-based copolymer" or "ethylene copolymer" refers to an interpolymer that comprises a majority amount of polymerized ethylene based on the weight of the copolymer, and only one comonomer (thus, only two monomer types).

The phrase "free-radical, high pressure polymerization process," as used herein, refers to a free radical initiated polymerization carried out at an elevated pressure of at least 100 MPa (1000 Bar).

The term "polymerization configuration," as used herein, refers to the devices used to polymerize and isolate a polymer. Such devices include one or more reactors, reactor pre-heater(s), monomer-reactor cooling device(s), Hyper-compressor(s), Primary compressor(s), Booster compressor(s), high pressure separator and/or low pressure separator.

The term "separator" refers to an element of a polymerization configuration which separates the reaction product (e.g., polymer) from unreacted monomer and other reaction components present during the polymerization reaction (e.g., catalyst, decomposition products).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

TEST METHODS

**Melt Index (12 and 110)**

Melt flow indices are measured according to ASTM Method D1238 (Procedure B). The 12 and 110 are measured at 190°C/2.16 kg and 190°C/10.0 kg, respectively.

*Density*

Samples for density measurement are prepared according to ASTM D 1928. Polymer samples are pressed at 190°C and 207 MPa (30,000 psi) for three minutes, and then at 21°C and 207 MPa for one minute. Measurements are made within one hour of sample pressing using ASTM D792, Method B.

*Melt Strength*

Melt strength is measured at 190°C using a Göettfert Rheotens 71.97 (Göettfert Inc.; Rock Hill, SC), melt fed with a Göettfert Rheotester 2000 capillary rheometer equipped with a flat entrance angle (180 degrees) of length of 30 mm and diameter of 2.0 mm. The pellets (20-30 gram pellets) are fed into the barrel (length = 300 mm, diameter = 12 mm), compressed and allowed to melt for 10 minutes before being extruded at a constant piston speed of 0.265 mm/s, which corresponds to a wall shear rate of 38.2 s$^{-1}$ at the given die diameter. The extrudate passes through the wheels of the Rheotens located 100 mm below the die exit and is pulled by the wheels downward at an acceleration rate of 2.4 mm/s$^2$. The force (in cN) exerted on the wheels is recorded as a function of the velocity of the wheels (in mm/s). Melt strength is reported as the plateau force (cN) before the strand broke.

**Standard Method for Hexane Extractables**

Hexane Extractables - Polymer pellets (from the polymerization pelletization process without further modification; approximately 2.2 grams (pellets) per press) are pressed in a Carver Press to a thickness of 63.5-88.9 $\mu$m (2.5-3.5 mils). The pellets are pressed at 190°C and 13.3 kN (3000 lbf) for three minutes, and then at 190°C and 178 k N (40000 lbf) for another three minutes. Non-residue gloves (PIP* CleanTeam* CottonLisle Inspection Gloves, Part Number: 97-501) are worn to prevent contamination of the films with residual oils from the hands of the operator. Films are cut into "2.54 cm (1-inch) by 2.54 cm (1-inch)" squares, and weighed (2.5 ± 0.05g). The films are extracted for two hours, in a hexane vessel, containing about 1000 ml of hexane, at 49.5 ± 0.5°C, in a heated water bath. The hexane used is an isomeric "hexanes" mixture (for example, Hexanes (Optima), Fisher Chemical, high purity mobile phase for HPLC and/or extraction solvent for GC applications). After two hours, the films are removed, rinsed in clean hexane, and dried in a vacuum oven (80 ± 5°C), at full vacuum (ISOTEMP Vacuum Oven, Model 281A, at approximately 102 kPa (30 inches Hg)) for two hours. The films are then place in a desiccator and allowed to cool to room temperature for a minimum of one hour. The films are then reweighed, and the amount of mass loss due to extraction in hexane is calculated. This method is based on 21 CRF 177.1520 (d)(3)(ii), with one deviation from FDA protocol by using hexanes instead of n-hexane.

**Water Vapor Transmission Rate (WVTR)**

Polymer films for WVTR are prepared by extrusion coatin a thin layer of the resin of interest onto a release liner. Coating experiments are performed on a Black-Clawson Extrusion Coating Line. The extruder is equipped with a 8.9 cm (3 ½ inch), 30:1 L/D, 4:1 compression ratio single flight screw with two spiral Mattock mixing sections. The nominal die width of 91 cm (36 inches) is deckled (metal dam to block the flow in the die at the die exit around the outer edges of the die, and sued to decrease the die width, and thus decrease the polymer flow out of the die) to an open die width of 61 cm (24 inches). In extrusion coating, a deckle is a die insert that sets the coating width of a slot die coater of the extrusion width of an extrusion die. It works by constraining the flow as the material exits the die.

Die gap is 635 $\mu$m (25 mil), and the air gap is 15 cm (6 inches). Blends of the various components are produced by weighing out the pellets, and then tumble blending samples until a homogeneous blend is obtained (approximately 30 minutes for each sample). The temperatures in each zone of the extruder are 177°C, 232°C, 288°C and 316°C (die) (350°F, 450°F, 550°F and 600°F (die)), respectively, leading to a target melt temperature of 316°C (600°F). The screw speed is 90 rpm, resulting in 113 kg/hr (250 lb/hr) output rate. Line speed is at 134 m/min (440 ft/min (fpm)) resulting in a 25.4 $\mu$m (1 mil) coating onto a 23 kg/ream (50 lb/ream) KRAFT paper (the width of KRAFT paper is 61 cm (24 inches); unbleached). In order to obtain a piece of polymer film for the WVTR test, a piece of release liner (width of release liner about 61 cm) is inserted between the polymer coating and the paper substrate before themolten polymer curtain touches the paper substrate to form a "polymer coating/release liner/KRAFT paper" configuration. The solidified polymer coatings are then released form the release liner for the WVTR test. Released films are cut into 9 cm x 10 cm test samples. Each polymer coating is around 25.4 $\mu$m (1 mil) in thickness. WVTR is measured with a Mocon W3/33 according to ASTM F1249-06, at 38°C, with 100% relative humidity (RH). The average value of two replicates is reported.

Estimated WVTR values for blends containing less than 10% of a HDPE component are calculated based on the following equation:

$$WVTR = -85.6 * (density\ differential) + 1.99$$

wherein *WVTR* is given in units of [g*mil/100 in$^2$*day] and the density differential in units of [g/cc] corresponds to the difference between the density of the final blend and the density of the base LDPE (Component (B)) used to form the blend (see Figure 1). The correlation between *WVTR* and *density differential* is obtained by fitting a linear regression on the data as shown in Figure 1, which represents for HDPE/LDPE blends with 15 wt% of a HDPE resin and 85 wt% (tubular) LDPE resin (MI = 6.9 g/10 min, density = 0.9194 g/cc; see experimental resins of WO 2017/003465).

**EXPERIMENTAL**

***Polymerizations - HDPE***

For HDPE-1 (HD-1) through HDPE-4 (HD-4), all raw materials (monomer and comonomer) and the process solvent (a narrow boiling range, high-purity isoparaffinic solvent) are purified with molecular sieves before introduction into the reaction environment. Hydrogen is supplied in pressurized cylinders, as a high purity grade, and is not further purified. The reactor monomer feed stream are pressurized, via a mechanical compressor, to above reaction pressure. The solvent and comonomer feed are pressurized, via a pump, to above reaction pressure. The individual catalyst components are manually batch diluted with purified solvent and pressured to above reaction pressure. All reaction feed flows are measured with mass flow meters and independently controlled with computer automated valve control systems. The fresh comonomer feed (if required) is mechanically pressurized and injected into the feed stream for the reactor.

The continuous solution polymerization reactor consists of a liquid full, non-adiabatic, isothermal, circulating, loop reactor, which is similar to a continuously stirred tank reactor (CSTR) with heat removal. Independent control of all fresh solvent, monomer, comonomer, hydrogen, and catalyst component feeds is possible. The total fresh feed stream to the reactor (solvent, monomer, comonomer, and hydrogen) is temperature controlled by passing the feed stream through a heat exchanger. The total fresh feed to the polymerization reactor is injected into the reactor at two locations, with approximately equal reactor volumes between each injection location. The fresh feed is controlled with each injector receiving half of the total fresh feed mass flow.

The catalyst components are injected into the polymerization reactor through a specially designed injection stinger and are combined into one mixed catalyst/cocatalyst feed stream prior to injection into the reactor. The primary catalyst component feed is computer controlled to maintain the reactor monomer conversion at a specified target. The cocatalyst components are fed based on calculated specified molar ratios to the primary catalyst component. Immediately following each fresh injection location (either feed or catalyst), the feed streams are mixed with the circulating polymerization reactor contents with static mixing elements. The contents of the reactor are continuously circulated through heat exchangers, responsible for removing much of the heat of reaction, and with the temperature of the coolant side responsible for maintaining an isothermal reaction environment at the specified temperature. Circulation around the reactor loop is provided by a pump. The final reactor effluent enters a zone where it is deactivated with the addition of, and reaction with, a suitable reagent (water). At this same reactor exit location, other additives may also be added.

Following catalyst deactivation and additive addition, the reactor effluent enters a devolatization system, where the polymer is removed from the non-polymer stream. The isolated polymer melt is pelletized and collected. The non-polymer stream passes through various pieces of equipment which separate most of the ethylene which was removed from the system. Most of the solvent and unreacted comonomer is recycled back to the reactor after passing through a purification system. A small amount of solvent and comonomer is purged from the process. The process conditions in the reactor are summarized in Table 1 and Table 2.

Table 1: Catalyst Information

|  | CAS name |
|---|---|
| Cat. A | Titanium, [N-(1,1-dimethyethyl)-1,1-dimethyl-1-[(1,2,3,3a,7a-h)-3-(1-pyrrolidinyl)-1H-inden-1-yl]silanaminato(2-)-kN][(1,2,3,4-h)-1,3-pentadiene] |
| Cat. B | Hafnium, dimethyl[2',2"-(propane-1,3-diylbis(oxy))bis(3-(2,7-di-tert-butyl-9H-carbazol-9-yl)-5'-fluoro-3'-methyl-5-(2,4,4-trimethylpentan-2-yl)[1,1'-bipheynl]-2-olato-.kappa.O])(2-)] |
| Co-Cat. B | Amines, bis(hydrogenated tallow alkyl)methyl, tetrakis(pentafluorophenyl)borate(1-) |
| Co-Cat. C | Aluminoxanes, iso-Bu Me, branched, cyclic and linear; modified methyl 3A aluminoxane |

Table 2: Process Conditions to Produce High Density Polyethylenes

| Sample # | Units | HD-1 | HD-2 | HD-3 | HD-4 |
|---|---|---|---|---|---|
| Reactor Configuration | -- | Single Reactor | Single Reactor | Single Reactor | Single Reactor |
| Comonomer | -- | 1-octene | 1-octene | 1-octene | 1-octene |
| Reactor Total Solvent Flow | kg/hr (lb/hr) | 1020 (2249) | 1260 (2777) | 789 (1740) | 1246 (2746) |
| Reactor Total Ethylene Flow | kg/hr (lb/hr) | 152 (336) | 187 (413) | 187 (412) | 185 (407) |
| Reactor Total Comonomer Flow | kg/hr (lb/hr) | 3.6 (8) | 1.4 (3) | 0.45 (1) | 8.2 (18) |
| Reactor Hydrogen Feed Flow | SCCM | 28581 | 19067 | 32510 | 9088 |
| Reactor Control Temperature | °C | 157 | 160 | 190 | 142 |
| Reactor Ethylene Conversion | % | 90.4 | 85.3 | 94.8 | 85.5 |
| Reactor Viscosity | cP | 0[a] | 8 | 79 | 82 |
| Reactor Catalyst | type | Cat. A | Cat. A | Cat. B | Cat. A |
| Reactor Cocatalyst 1 | type | Co-Cat. B | Co-Cat. B | Co-Cat. B | Co-Cat. B |
| Reactor Cocatalyst 2 | type | Co-Cat. C | Co-Cat. C | Co-Cat. C | Co-Cat. C |
| Reactor Catalyst Efficiency | g Polymer/ g catalyst metal | 522000 | 3239000 | 8300000 | 5452000 |
| Reactor Cocatalyst to Catalyst Metal Molar Ratio | Ratio | 1.5 | 1.4 | 2.5 | 1.4 |
| Reactor Scavenger to Catalyst Metal Molar Ratio | Ratio | 4.0 | 8.0 | 37 | 8.0 |
| [a] Below measuring capability | | | | | |

*Polymer Properties*

Polymer properties of the LDPEs and HDPEs used in this study are listed in Table 3.

Table 3: Polymer Properties

| Component ID | MI ($I_2$, dg/min) | Density (g/cc) | 110/I2 | Melt Strength (cN) | Hexane Extractables (wt %)** |
|---|---|---|---|---|---|
| AGILITY EC 7220 | 1.5 ± 0.3* | 0.9175 ± 0.0015* | --[a] | 13.4 | 2.15 |
| AGILITY EC 7000 | 3.9 | 0.9190 | --[a] | 10.1 | 3.79 |
| DOW LDPE 410E | 2.0 | 0.9250 | --[a] | 6.5 | -- [a] |
| DOW LDPE 320E | 1.0 | 0.9250 | --[a] | 12.0 | -- [a] |
| HD-1 | 840 | 0.9669 | --[a] | --[a] | -- [a] |
| HD-2 | 64.2 | 0.9648 | 6.0 | -- [a] | 0.55 |
| HD-3 | 26.6 | 0.9630 | 5.0 | -- [a] | 0.15 |
| HD-4 | 4.26 | 0.9451 | 5.8 | 0.601 | 0.25 |
| [a] Not measured | | | | | |
| * Average values taken from product specification. **The wt% is based on the total weight of the polymer. [a] Below measuring capability | | | | | |

*Polymer Compositions (Blends)*

Examples 1 — 5 and Examples A - D were each made by mixing the prescribed amounts of AGILITY EC 7220 and the corresponding HDPE resin, as shown in Table 4. The polymer components (pellet form) are compounded using an "18 mm" twin screw extruder (micro-18). The twin screw extruder used is a Leistritz machine controlled by Haake software. The extruder has five heated zones, a feed zone, and a "3 mm" strand die. The feed zone is cooled by flowing river water, while the remaining zones 1-5 and die are electrically heated and air cooled to 120 °C, 135 °C, 150 °C, 190 °C, 190 °C, and 190°C, respectively. The pelletized polymer components are combined in a plastic bag and tumble blended by hand to form a dry blend. After preheating the extruder, the load cell and die pressure transducers are calibrated. The drive unit for the extruder is run at 200 rpm, which results by gear transfer to a screw speed of 250 rpm. The dry blend is then fed (2.7-3.6 kg/hr (6-8 lbs/hr)) to the extruder through a twin auger K-Tron feeder (model # K2VT20) using pellet augers. The hopper of the feeder is padded with nitrogen, and the feed cone to the extruder is covered with foil to minimize air intrusion to minimize possible oxygen degradation of the polymer. The resulting strand is water quenched, dried with an air knife, and pelletized with a Conair chopper.

Example E is made by mixing the prescribed amounts of AGILITY EC 7000 and HD-2 resin in the following way. A melt blend sample is generated in a 30 mm corotating, intermeshing Coperion Werner-Pfleiderer ZSK-30 twin screw extruder. The ZSK-30 has ten barrel sections, with an overall length of 960 mm and an L/D ratio of 32. The extruder consists of a DC motor connected to a gear box by V-belts. The 15 hp (11.2 kW) motor is powered by a GE adjustable speed drive located in the control cabinet. The control range of the screw shaft speed is 1:10. The maximum extruder screw speed is 500 rpm. The extruder itself has eight (8) heated/cooled barrel sections, along with a 30 mm spacer, which makes up five temperature controlled zones. It has a cooled only feed section and a heated only die section which is held together by tie-rods and supported on the machine frame. Each section can be heated electrically with angular half-shell heaters and cooled by a special system of cooling channels. The screws consist of continuous shafts on which screw-flighted components and special kneading elements are installed, in any required order. The elements are held together radially by keys and keyways and axially by a screwed-in screw tip. The screw shafts are connected to the gear-shafts by couplings and can easily be removed from the barrels for dismantling. The melt blends are pelletized for subsequent characterization.

As discussed, the prescribed amounts of low density polyethylene and high density polyethylene used to formulate each of the compositions are shown in Table 4. Some composition properties are listed in Table 5 below. The WVTR values are estimate based on data obtained for blends with 15% HDPE and 85% (tubular) LDPE. See Figure 1. Actual WVTR values are expected to be slightly better (lower) due to the slightly higher density of the respective LDPE base resins used in these examples.

Table 4: Compositions

| Composition ID | LDPE Component (B) | LDPE (wt. %) | HDPE Component (A) | HDPE composition (wt. %) |
|---|---|---|---|---|
| Example A* | AGILITY EC 7220 | 100 | n/a | 0 |
| Example B | AGILITY EC 7220 | 97 | HD-1 | 3 |
| Example C | AGILITY EC 7220 | 95 | HD-1 | 5 |
| Example 1 | AGILITY EC 7220 | 97 | HD-2 | 3 |
| Example D | AGILITY EC 7220 | 95 | HD-2 | 5 |
| Example 2 | AGILITY EC 7220 | 97 | HD-3 | 3 |
| Example 3 | AGILITY EC 7220 | 95 | HD-3 | 5 |
| Example 4 | AGILITY EC 7220 | 97 | HD-4 | 3 |
| Example 5 | AGILITY EC 7220 | 95 | HD-4 | 5 |
| Example E | AGILITY EC 7000 | 80 | HD-2 | 20 |
| Example F | LDPE 401E | 100 | - | 0 |
| Example G | LDPE 320E | 100 | - | 0 |
| * Subject to extrusion process as described above. | | | | |

Table 5: Selected Properties of the Compositions

| Composition ID | MI (I$_2$) dg/min | Density (g/cc) | Density differential[a] (g/cc) | Weight ratio[b] A/B | MI ratio[c] | Melt Strength (cN) | MS ratio[d] | Hexane Extractables (wt %) | WVTR estimate[e] ([g· mil/ (100 in$^2$·day)]) |
|---|---|---|---|---|---|---|---|---|---|
| Example A | 1.13 | 0.9197 | n/a | n/a | n/a | 13.4 | | 2.15 | 1.99 |
| Example B comparative | 1.44 | 0.9209 | 0.0012 | 0.031 | 745 | 13.6 | 1.01 | 2.15 | 1.89 |
| Example C comparative | 1.69 | 0.9217 | 0.0020 | 0.053 | 745 | 12.4 | 0.93 | 2.04 | 1.82 |
| Example 1 | 1.28 | 0.9212 | 0.0015 | 0.0309 | 57.0 | 14.9 | 1.11 | 2.12 | 1.87 |
| Example D comparative | 1.55 | 0.9221 | 0.0024 | 0.053 | 57.0 | 13.8 | 1.03 | 2.00 | 1.79 |
| Example 2 | 1.29 | 0.9211 | 0.0014 | 0.031 | 23.4 | 14.0 | 1.04 | 2.05 | 1.88 |
| Example 3 | 1.34 | 0.9221 | 0.0024 | 0.053 | 23.4 | 14.7 | 1.10 | 1.96 | 1.79 |
| Example 4 | 1.18 | 0.9210 | 0.0013 | 0.031 | 3.78 | 15.6 | 1.16 | 2.11 | 1.88 |
| Example 5 | 1.19 | 0.9215 | 0.0018 | 0.053 | 3.78 | 15.5 | 1.16 | 2.07 | 1.84 |
| Example E comparative | 11.1 | 0.9273 | 0.0083 | 0.25 | 16.5 | 3.9 | 0.39 | 2.47 | 1.38[f] |
| Example F Comparative | 2.0 | 0.9250 | n/a | n/a | n/a | 6.5 | | n/a | n/a |
| Example G Comparative | 1.0 | 0.9250 | n/a | n/a | n/a | 12.0 | | n/a | n/a |

[a] Density differential = ($\rho_C$ - $\rho_B$). Here, density of composition - density Example A.
[b] A = mass of HDPE component; B = mass of LDPE component.
[c] Ratio of MI (I$_2$) of HDPE component to MI (I$_2$) of LDPE component.
[d] Ratio of melt strength of composition to melt strength of component (B) (LDPE).
[e] Unless otherwise indicated, WVTR estimate based on data obtained from PCT/US15/038626 for blends with 15% HDPE resins and 85% (tubular) LDPE resins (MI = 6.9 g/10 min, density = 0.9194 g/cc; see experimental resins of PCT/US15/038626). Actual WVTR expected to be slightly better due to the slightly higher density of the LDPE base resin used in these examples.
[f] Actual measurement. Sample prepared in an extrusion coater fed with a dry (tumble) blend of components A and B.

EP 3 559 092 B1

It has been discovered that the inventive compositions achieve a higher desnity and lower WVTR value while maintaining a high melt strength and a low hexane extractable level.

Examples 1-5 each have a melt strength ratio (melt strength of the composition to the melt strength of component (B)) of greater than or equal to 1.04, while the melt strength ratio of Examples B-D is less than 1.04. A higher melt strength ratio results in improved extrusion coating processability.

Examples 1-5 also have a composition density of greater than the density of the LDPE-1 (component (B)) alone with a density differential ($p_C - \rho_B$) in the range of 0.0012-0.0024 g/cc. The small density differential is dictated by the small amount of HDPE added to the formulation. A higher density of the final formulations of Examples 1-5 result in an improved (lower) WVTR as compared to LDPE-1 alone (Example A).

In addition to an improved (lower) WVTR, the higher density of the formulation also leads to a reduction in coefficient of friction and enhancement in scuff resistance, while maintaining high melt strength, all of which are desirable for extrusion coating and articles produced via extrusion coating.

Examples 1-5 also show an unexpected improvement in the compositions' melt strength. Examples A-G show that as the compositions' densities increase, the melt strength values generally decrease. For example, Examples A, F and G each comprise the LDPE (component (B)) only without any HDPE modifying component (A). As the density of the LDPE increases, the melt strength shows a drastic decrease, which is a well-known limitation of the high pressure, radical polymerization process. Similarly, Examples B and C are each LDPE/HDPE blends with composition densities of 0.9209 g/cc and melt strength values of 13.6 and 12.4 cN, respectively. In contrast to the general trend of increasing density/decreasing melt strength, Examples 1-5 show a surprising and unexpected improvement in melt strength values compared to Example A despite their higher densities. This improvement in melt strength is particularly evident with respect to Example D and Example 3. Both Example D and Example 3 are LDPE/HDPE blends (95/5) and both have a composition density of 0.9221 g/cc. However, Example D (comparative) has a melt strength of 13.8 cN and Example 3 (inventive) has an unexpectedly higher melt strength of 14.7 cN. As will be appreciated, the improvements obtained with the processes and and compositions of the present disclosure are obtained based on the relative properties of the components A and B used. It is therefore expected that similar improvements will be seen using component (A) and B resins other than those shown in the examples provided the relative properties are met.

**Process to Form Compositions**

The compositions listed above can be formed using a set-up as shown in Figure 2. Such a process can be used to produce high pressure ethylene-based resins with enhanced melt strength and a higher final density, as compared to resins produced by conventional means. Preferably, the process involves an in-line intimate mixing of a stream of high pressure polyethylene homopolymer, in the molten state, and a stream of a high density ethylene-based polymer in the molten state. Specifically, the process comprises a free radical, high pressure polymerization process, wherein the polymerization configuration comprises at least one reactor, at least one separator, and at least one pelletizer, and where a stream of high density ethylene-based polymer is added to a molten stream of the high pressure resin, after the high pressure resin exits the separator, in the molten state, and before the high pressure resin is solidified in the pelletizer. Furthermore, the inventive process may also make use of a device to feed the high density resin, in molten state, to a molten stream of the high pressure resin before the pelletizer.

Furthermore, the process also includes a device to feed the high density resin, in the molten state, to a molten stream of the high pressure resin, before the pelletizer. The process is more advantageous, as it provides an in-line configuration for obtaining a resin with the desired final properties. The process allows for a reduction in the number of steps to produce a resin, with the desired final properties, as compared to conventional mixing processes, in which typically solid pellets of the high pressure resin are re-melted in a subsequent process/step, and then combined with the desired amounts of the high density polyethylene.

In a particular configuration, a single-screw (side-arm) extruder can be used to deliver the molten stream of high density polyethylene into the finishing sections (e.g., the sections between a separator (e.g., separator operates below 5 MPa (50 Bar), or 4 MPa (40 Bar), or 3 MPa (30 Bar), or 2 MPa (20 Bar)) and a pelletizer) of a free radical, high pressure polymerization process. This technology works well when the side-arm extruder injects into, for instance, the discharge section of a large single screw extruder or a gear pump, such as that used to deliver a stream of molten component (B) from the separator unit into the pelletizer. The side-arm injects into the inlet, discharge, or in-between section of the, for instance, large single screw extruder or gear pump. Mixing into the main resin (LDPE) can be obtained by using a pumping device (extruder or gear pump) and/or other mixing devices (e.g., static mixers) in the discharge of the polymer pumping device. Side-arm extruders are designed with effective screw and temperature control technology to melt and mix the stream of high density polyethylene resin in such a way as to match the main stream of molten high pressure resin in viscosity and melt temperature. The extruder barrel temperatures can be controlled, in zones over the length of the screw, by using either steam or hot oil, and, in combination with the screw design, provides effective melting and pressure to inject into the main polymer stream (LDPE). Side-arm feed rates can operate in ratio with the main polymer flow, in order to ensure correct concentrations of the high density resin in the final product. Side-arm extruders operate in a slightly starve-fed mode by using loss-and-weight or volumetric feeders upstream of the extruder. A masterbatch containing the high density polyethylene can be further tailored to provide both additives and/or other functional polymers to improve the final properties of the composition.

This process is advantageous versus the alternative of first producing LDPE and HDPE pellets, and then reprocessing them to form an intimate blended mixture. Such an alternative process requires an additional energy consumption of, typically, at least 0.2 kWh/kg product, as compared to the inventive process (polymerization of LDPE, side-arm feeding of HDPE, and the mixing of the polymer components).

It has been discovered that the higher density "LDPE/HDPE compositions" with higher and variable density can be produced at reduced power requirement and lower production cost and have high melt strength, making them suitable for applications as extrusion coatings requiring lower water vapor transmission and specific board stickiness for lamination applications (for example, wall paper).

**Claims**

1. A process for producing a composition comprising the following:

   A) an ethylene-based polymer that has a density greater than, or equal to, 0.940 g/cc and a melt index (12) of from greater than, or equal to, 2.0 g/10 min to less than, or equal to, 70.0 g/10 min, and
   B) an ethylene homopolymer, formed by polymerizing a reaction mixture comprising ethylene, using a free-radical, high pressure polymerization process; and

   wherein component (B) is polymerized in a polymerization configuration comprising at least one reactor, at least one separator, and at least one pelletizer, and
   wherein component (A) is added to a molten stream of component (B), after component (B) exits the separator and before component (B) is solidified in the pelletizer.

2. The process of claim 1, wherein the at least one reactor is a tubular reactor.

3. The process of claim 1 or claim 2, wherein the ethylene-based polymer of component (A) is added to the molten stream of component (B) using a side-arm extruder.

4. The process of any one of claims 1-3, wherein component (A) and component (B) are mixed in at least one static mixer before the pelletizer.

5. A polymerization configuration for producing a composition comprising the following:

   A) an ethylene-based polymer that has a density greater than, or equal to, 0.940 g/cc and a melt index (12) of from greater than, or equal to, 2.0 g/10 min to less than, or equal to, 70.0 g/10 min, and
   B) an ethylene homopolymer, formed by polymerizing a reaction mixture comprising ethylene, using a free-radical, high pressure polymerization process; and
   wherein the polymerization configuration comprises at least one reactor, at least one separator, at least one pelletizer, and a device used to feed component (A), in molten state, to a molten stream of component (B) before the pelletizer.

6. The polymerization configuration of claim 5, wherein the at least one reactor is a tubular reactor.

7. The polymerization configuration of claim 5 or claim 6, wherein the device is a side-arm extruder.

8. The polymerization configuration of any of claims 5-7, further comprising at least one static mixer before the pelletizer.

9. A composition comprising the following:

   A) an ethylene-based polymer that has a density greater than, or equal to, 0.940 g/cc and a melt index (12) of from greater than, or equal to, 2.0 g/10 min to less than, or equal to, 70.0 g/10 min, and
   B) a LDPE, formed by polymerizing a reaction mixture comprising ethylene, using a free-radical, high pressure polymerization process; and

wherein the ratio of the melt strength of the composition to the melt strength of component (B) $\geq$ 1.04; and
wherein the composition has a density > 0.920 g/cc.

10. An article comprising at least one component formed from the composition of claim 9.

**Patentansprüche**

1. Ein Verfahren zum Herstellen einer Zusammensetzung, die Folgendes beinhaltet:

A) ein ethylenbasiertes Polymer, das eine Dichte von größer als oder gleich 0,940 g/cm$^3$ und einen Schmelzindex ($I_2$) von größer als oder gleich 2,0 g/10 min bis weniger als oder gleich 70,0 g/10 min aufweist und
B) ein Ethylenhomopolymer, das durch das Polymerisieren einer Reaktionsmischung, die Ethylen beinhaltet, unter Verwendung eines Verfahrens zur radikalischen Hochdruckpolymerisation gebildet wird; und

wobei Komponente (B) in einer Polymerisationskonfiguration polymerisiert ist, die mindestens einen Reaktor, mindestens einen Separator und mindestens einen Pelletierer beinhaltet und
wobei Komponente (A) einem geschmolzenen Strom von Komponente (B) hinzugegeben wird, nachdem Komponente (B) aus dem Separator austritt und bevor Komponente (B) in dem Pelletierer verfestigt wird.

2. Verfahren gemäß Anspruch 1, wobei der mindestens eine Reaktor ein Rohrreaktor ist.

3. Verfahren gemäß Anspruch 1 oder Anspruch 2, wobei das ethylenbasierte Polymer von Komponente (A) dem geschmolzenen Strom von Komponente (B) unter Verwendung eines Seitenarmextruders hinzugegeben wird.

4. Verfahren gemäß einem der Ansprüche 1-3, wobei Komponente (A) und Komponente (B) in mindestens einem statischen Mischer vor dem Pelletierer gemischt werden.

5. Eine Polymerisationskonfiguration zum Herstellen einer Zusammensetzung, die Folgendes beinhaltet:

A) ein ethylenbasiertes Polymer, das eine Dichte von größer als oder gleich 0,940 g/cm$^3$ und einen Schmelzindex ($I_2$) von größer als oder gleich 2,0 g/10 min bis weniger als oder gleich 70,0 g/10 min aufweist und
B) ein Ethylenhomopolymer, das durch das Polymerisieren einer Reaktionsmischung, die Ethylen beinhaltet, unter Verwendung eines Verfahrens zur radikalischen Hochdruckpolymerisation gebildet wird; und
wobei die Polymerisationskonfiguration mindestens einen Reaktor, mindestens einen Separator, mindestens einen Pelletierer und eine Vorrichtung beinhaltet, die verwendet wird, um Komponente (A), in geschmolzenem Zustand, einem geschmolzenen Strom von Komponente (B) vor dem Pelletierer hinzuzuführen.

6. Polymerisationskonfiguration gemäß Anspruch 5, wobei der mindestens eine Reaktor ein Rohrreaktor ist.

7. Polymerisationskonfiguration gemäß Anspruch 5 or Anspruch 6, wobei die Vorrichtung ein Seitenarmextruder ist.

8. Polymerisationskonfiguration gemäß einem der Ansprüche 5-7, die ferner mindestens einen statischen Mischer vor dem Pelletierer beinhaltet.

9. Eine Zusammensetzung, die Folgendes beinhaltet:

A) ein ethylenbasiertes Polymer, das eine Dichte von größer als oder gleich 0,940 g/cm$^3$ und einen Schmelzindex ($I_2$) von größer als oder gleich 2,0 g/10 min bis weniger als oder gleich 70,0 g/10 min aufweist und
B) ein LDPE, das durch das Polymerisieren einer Reaktionsmischung, die Ethylen beinhaltet, unter Verwendung eines Verfahrens zur radikalischen Hochdruckpolymerisation gebildet wird; und

wobei das Verhältnis der Schmelzfestigkeit der Zusammensetzung zu der Schmelzfestigkeit von Komponente (B) $\geq$ 1,04 ist; und
wobei die Zusammensetzung eine Dichte von > 0,920 g/cm$^3$ aufweist.

**10.** Ein Artikel, der mindestens eine Komponente, die aus der Zusammensetzung aus Anspruch 9 gebildet ist, beinhaltet.

**Revendications**

**1.** Un procédé pour produire une composition comprenant ce qui suit :

A) un polymère à base d'éthylène qui a une masse volumique supérieure, ou égale, à 0,940 g/cm$^3$ et un indice de fluidité à l'état fondu (I$_2$) allant d'un indice supérieur, ou égal, à 2,0 g/10 min à un indice inférieur, ou égal, à 70,0 g/10 min, et
B) un homopolymère d'éthylène, formé par polymérisation d'un mélange réactionnel comprenant de l'éthylène, en utilisant un procédé de polymérisation à haute pression radicalaire ; et

dans lequel le constituant (B) est polymérisé dans une configuration de polymérisation comprenant au moins un réacteur, au moins un séparateur, et au moins un granulateur, et
dans lequel le constituant (A) est ajouté à un flux fondu du constituant (B), après que le constituant (B) est sorti du séparateur et avant que le constituant (B) ne soit solidifié dans le granulateur.

**2.** Le procédé de la revendication 1, dans lequel l'au moins un réacteur est un réacteur tubulaire.

**3.** Le procédé de la revendication 1 ou de la revendication 2, dans lequel le polymère à base d'éthylène du constituant (A) est ajouté au flux fondu du constituant (B) en utilisant une extrudeuse latérale.

**4.** Le procédé de n'importe laquelle des revendications 1 à 3, dans lequel le constituant (A) et le constituant (B) sont mélangés dans au moins un mélangeur statique avant le granulateur.

**5.** Une configuration de polymérisation pour produire une composition comprenant ce qui suit :

A) un polymère à base d'éthylène qui a une masse volumique supérieure, ou égale, à 0,940 g/cm$^3$ et un indice de fluidité à l'état fondu (I$_2$) allant d'un indice supérieur, ou égal, à 2,0 g/10 min à un indice inférieur, ou égal, à 70,0 g/10 min, et
B) un homopolymère d'éthylène, formé par polymérisation d'un mélange réactionnel comprenant de l'éthylène, en utilisant un procédé de polymérisation à haute pression radicalaire ; et
la configuration de polymérisation comprenant au moins un réacteur, au moins un séparateur, au moins un granulateur, et un dispositif utilisé pour introduire le constituant (A), à l'état fondu, dans un flux fondu du constituant (B) avant le granulateur.

**6.** La configuration de polymérisation de la revendication 5, dans laquelle l'au moins un réacteur est un réacteur tubulaire.

**7.** La configuration de polymérisation de la revendication 5 ou de la revendication 6, dans laquelle le dispositif est une extrudeuse latérale.

**8.** La configuration de polymérisation de n'importe lesquelles des revendications 5 à 7, comprenant en outre au moins un mélangeur statique avant le granulateur.

**9.** Une composition comprenant ce qui suit :

A) un polymère à base d'éthylène qui a une masse volumique supérieure, ou égale, à 0,940 g/cm$^3$ et une indice de fluidité à l'état fondu (I$_2$) allant d'un indice supérieur, ou égal, à 2,0 g/10 min à un indice inférieur, ou égal, à 70,0 g/10 min, et
B) un PEBD, formé par polymérisation d'un mélange réactionnel comprenant de l'éthylène, en utilisant un procédé de polymérisation à haute pression radicalaire ; et

dans laquelle le rapport de la résistance à l'état fondu de la composition à la résistance à l'état fondu du constituant (B) $\geq$ 1,04 ; et
la composition ayant une masse volumique > 0,920 g/cm$^3$.

**10.** Un article comprenant au moins un constituant formé à partir de la composition de la revendication 9.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62437924
- WO 2014081458 A
- WO 2014190041 A
- EP 0792318 A
- WO 2005068548 A
- WO 2013078018 A
- WO 8300490 A
- WO 2015092662 A
- WO 2014190036 A
- WO 2014190039 A
- WO 2013178242 A1
- WO 2013178241 A1
- WO 2013078224 A
- US 7956129 B
- US 7812094 B
- US 8247065 B
- US 6291590 B
- EP 1187876 A1
- EP 2123707 A1
- WO 2016053483 A
- WO 0214379 A
- WO 0168723 A
- WO 2012057975 A
- US 61579067 B
- WO 2013095969 A
- US 61664956 B
- WO 2017003465 A
- US 15038626 W